# EUROPÄISCHE PATENTSCHRIFT

(11) **EP 0 866 944 B1**
(45) Veröffentlichungstag und Bekanntmachung des Hinweises auf die Patenterteilung: **08.08.2001**
(21) Anmeldenummer: 96946156.5
(22) Anmeldetag: 03.12.1996
(51) Int. Cl.: G01B 15/02

(54) **VORRICHTUNG ZUR KONTROLLE VON FLÄCHENMASSEN**
DEVICE FOR TESTING FLAT MATERIALS
DISPOSITIF POUR CONTROLER LES DIMENSIONS DE COMPOSANTS PLATS

(30) Priorität: 05.12.1995 DE 19545340
(43) Veröffentlichungstag der Anmeldung: 30.09.1998
(73) Patentinhaber: Vacutec Messtechnik GmbH, 01277 Dresden (DE)
(72) Erfinder: FEIGE, Christian, D-85567 Grafing (DE); URBAN, Franz-Josef, D-55270 Ober-Olm (DE); HILDEBRANDT, Steffen, D-01219 Dresden (DE)
(74) Vertreter: Pfeiffer, Eva
(86) Internationale Anmeldenummer: DE9602314
(87) Internationale Veröffentlichungsnummer: WO9721075

(56) Entgegenhaltungen:
- DE-A- 1 812 893
- FR-A- 1 260 805
- US-A- 4 720 808
- PATENT ABSTRACTS OF JAPAN vol. 10, no. 97 (P-446) [2154] , 15.April 1986 & JP 60 230009 A (TOSHIBA K.K.), 15.November 1985,

## Beschreibung

Die Erfindung betrifft eine Vorrichtung zur Kontrolle von Flächenmassen während der Produktion von Materialbahnen mittels einer Strahlungsquelle, welche die Materialbahn bzw. das Meßgut durchstrahlt und Detektion der Reststrahlung auf der der Strahlungsquelle gegenüberliegenden Seite des Meßgutes mit Hilfe einer mit ionisierbarem Gas gefüllten Detektoranordnung.

Derartige Vorrichtungen werden beispielsweise für die kontinuierliche Dickenmessung von kalt- oder warmgewalzten Blechen oder Folien, oder auch zur kontinuierlichen Dickenmessung von Papierbahnen o.dgl., verwendet. Die Dickenmessung erfolgt dabei punktförmig mit Hilfe einer Strahlungsquelle, wie einer Röntgen- oder Kernstrahlungsquelle mit geeigneter Intensität, Strahlungsart und Energie, deren von der Materialbahn oder dem Meßgut geschwächte Strahlungsintensität durch eine Ionisationskammer gemessen wird. Für den Fall, daß das Dickenprofil über die gesamte Breite der Materialbahn gemessen werden soll, kann die Strahlungsquelle und die Ionisationskammer an einem Träger befestigt werden, der dann, die zu messende Materialbahn umgreifend, quer über diese bewegt wird. Nachteilig hierbei ist jedoch, daß die Dickenmessung nach wie vor punktförmig erfolgt, was insbesondere bei sehr schnell bewegten Materialbahnen, wie dies bei Walzstraßen in der Regel der Fall ist, dazu führt, daß nur eine prinzipiell unvollständige Aussage über die Materialdicke bezogen auf die Breite der Materialbahn möglich ist. Eine Interpolation der Meßwerte über die gesamte Materialbreite ist zwar rechnerisch möglich, liefert aber nicht immer die gewünschte Genauigkeit.

Ein ähnliches Ergebnis wird erreicht, wenn eine Vielzahl von Ionisationskammern linienförmig nebeneinander angeordnet werden und die Strahlungsquelle in einem Traversiergerüst relativ gegenüber den Ionisationskammern und quer zur Bewegungsrichtung der zu messenden Materialbahn bewegt wird. Auch die Verwendung einer linienförmigen Strahlungsquelle und eine relativ zu dieser bewegbare Ionisationskammer ist bekannt.

Bei schneller Materialbewegung lassen sich jedoch Regelvorgänge und damit eine Beeinflussung des Herstellungsprozesses nur schwer realisieren. Aus diesen Gründen wurden Meßvorrichtungen entwickelt, mit denen die kontinuierliche Messung über die gesamte Materialbreite möglich ist.

Eine solche Vorrichtung zur Dickenmessung von Flachprofilen ist aus der DE 31 40 714 A1 bekannt. Hierbei sind oberhalb des zu messenden Flachprofiles ein oder mehrere punktförmige Strahlungsquellen angeordnet, denen unterhalb des Flachprofiles jeweils eine Vielzahl von Ionisationskammern zugeordnet sind. Da die Strahlungsquellen als Punktquellen ausgebildet sind und die Strahlung fächerförmig ausgeblendet ist, sind die jeweils einer Strahlungsquelle zugeordneten Ionisationskammern auf die Strahlungsquelle ausgerichtet. Die Ionisationskammern sind dazu in einem Kollimatorbalken angeordnet, der mit zylindrischen Kollimatoröffnungen versehen ist, die mit ihrer Achse genau auf die Strahlungsquelle ausgerichtet sind. Damit wird jedoch nicht erreicht, daß die jede Ionisationskammer erreichende Strahlungsintensität gleich ist.

Eine ähnliche Vorrichtung geht auch aus der DE 37 07 107 A1 und DE 1812893 hervor, wobei hier die Ionisationskammern bzw. die Detektoren über die Fläche des zu messenden Gutes verteilt in mehreren Reihen angeordnet sind. Damit läßt sich eine Verbesserung der Auflösung erreichen.

Schließlich zeigt noch die US-A-4 720 808 ein Verfahren und eine Vorrichtung zur Messung der Flächenmasse, bei der unterhalb des zu messenden Meßgutes mehrere Strahlungsquellen nebeneinander angeordnet sind. Die von den Strahlungsquellen ausgehende Strahlung wird auf der den Strahlungsquellen gegenüberliegenden Seite des Meßgutes von einzelnen Detektoren empfangen. Die Anzahl der Detektoren entspricht der Anzahl der Strahlungsquellen.

Entsprechend der FR-A-1 260 805 kann als ionisierbares Gas Argon verwendet werden, das in die Ionisationskammer zu füllen ist.

Allen diesen Vorrichtungen ist gemeinsam, daß entweder eine aufwendige mechanische Traversierung erforderlich ist, oder daß eine hochpräzise Ausrichtung der Ionisationskammern, oder der Detektoren gewährleistet werden muß, um zu vergleichbaren Meßergebnissen zu kommen. Darüberhinaus ist bei der Verwendung mehrerer Ionisationskammern ein erheblicher technischer Aufwand notwendig, um bei allen Ionisationskammern möglichst gleiche Parameter sicherzustellen, oder es muß ein aufwendiger laufender Abgleich vorgenommen werden, da sich u.a. durch die Gasfüllungen bedingte Parameteränderungen ergeben.

Der Erfindung liegt deshalb die Aufgabe zugrunde, eine Vorrichtung zur Kontrolle von Flächenmassen zu schaffen, welche die Mängel des Standes der Technik vermeidet und die insbesondere eine möglichst detaillierte Information über die Flächenmasse liefert.

Erfindungsgemäß wird die Aufgabenstellung durch die kennzeichnenden Merkmale des Patentanspruchs 1 gelost. Bevorzugte Ausführungsformen gehen aus den abhängigem Ansprüchen hervor.

Durch die Erfindung wird die Möglichkeit zur Messung des Querprofiles von Materialbahnen geschaffen, so daß eine unmittelbare Einflußnahme auf den Produktionsprozeß möglich wird. Da die Strahlungsquelle und die Meßkammern während des Meßvorganges nicht mehr bewegt werden müssen, reduziert sich der technische Aufwand erheblich. Darüberhinaus ermöglicht der geringe Abstand zwischen der Strahlungsquelle und den Meßkammern die Verwendung weicher Strahlung. Die gemeinsame Gasfüllung verhindert durch das Füllgas bedingte Empfindlichkeitsänderungen.

Die Erfindung soll nachfolgend an Ausführungsbeispielen näher erläutert werden. In den zugehörigen Zeichnungen zeigen:
- Fig. 1: eine erfindungsgemäße Detektoranordnung mit linienförmiger Strahlungsquelle;
- Fig. 2: eine perspektivische Detaildarstellung der Detektoranordnung;
- Fig. 3: eine Detektoranordnung mit linienförmiger Strahlungsquelle und einem Kollimator;
- Fig. 4: eine Detektoranordnung mit runden Sektionen und zugehörigen Strahleneintrittsfenstern;
- Fig. 5: eine Detektoranordnung mit eckigen Sektionen und runden Strahleneintrittfenstern;
- Fig. 6: eine Reihenanordnung von Sektionen mit einem durchgehenden Strahleneintrittsfenster;
- Fig. 7: eine Reihenanordnung von Sektionen mit großflächigen Strahleneintrittsfenstern; und
- Fig. 8: eine zweireihige Anordnung von Sektionen.

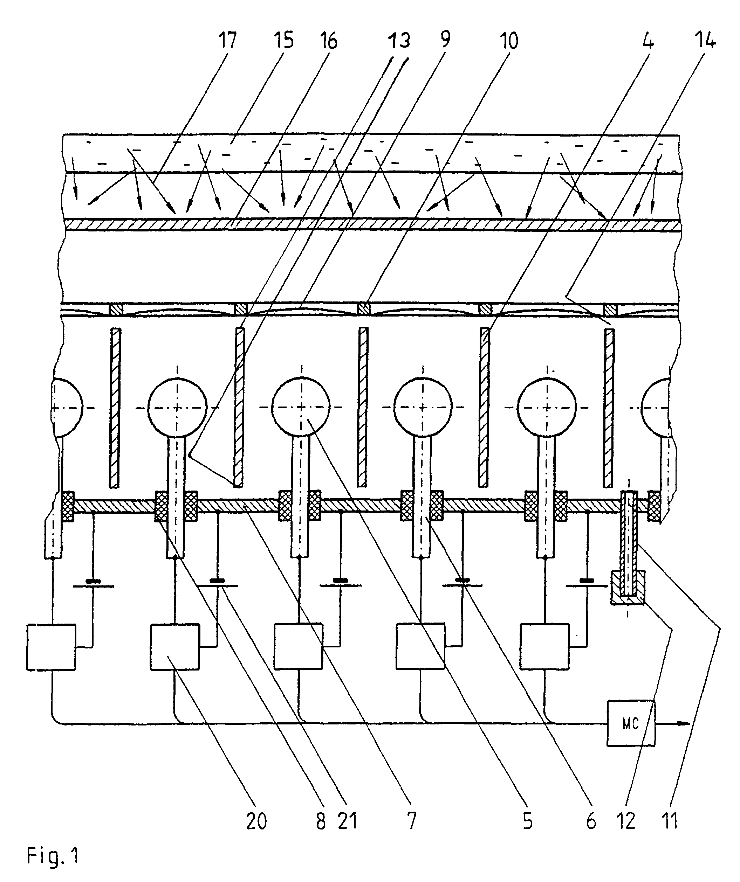

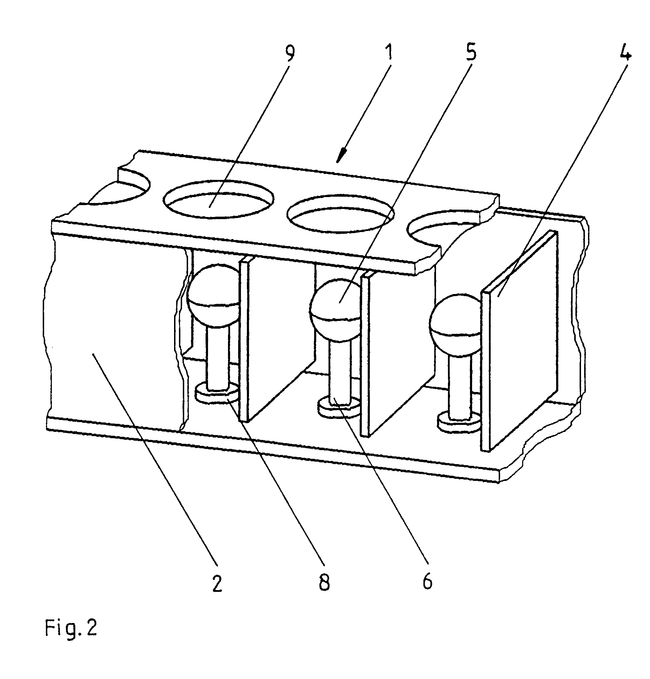

Aus Fig. 1 und 2 ist eine erfindungsgemäße Detektoranordnung 1 aus einem trogförmigen Gehäuse 2 mit innenliegenden Sektionen 3 ersichtlich. Die Sektionen 3 werden durch zwischen diesen angeordnete Wandelektroden 4 und durch das Gehäuse 2 der Detektoranordnung 1 begrenzt. Innerhalb der Sektionen 3 sind Sammelelektroden 5 auf Stützen 6 befestigt, die im Boden 7 des Gehäuses 2 über Isolatoren 8 gasdicht fixiert sind.

Den oberen Abschluß des Gehäuses 2 bildet eine mit Strahleneintrittsfenstern 9 versehene Verschlußplatte 10, die mit dem Gehäuse 2 gasdicht verbunden ist. Die Strahleneintrittsfenster 9 sind auf übliche Weise durch eine dünne Metallfolie verschlossen, die vorzugsweise unter Vorspannung stehend, nach oben gewölbt ist.

Zur Evakuierung und zum Einlaß eines ionisierbaren Gases befindet sich im Boden 7 des Gehäuses 2 ein Abpumpstutzen 11, der nach Einstellung des nötigen Gasdruckes innerhalb des Gehäuses 2 durch einen Verschluß 12 abgedichtet ist.

Wie aus Fig. 1 ersichtlich ist, sind die Wandelektroden 4 nur mit den Seitenwänden des Gehäuses 2 verbunden, wobei die unteren und oberen Stirnkanten 13 einen Zwischenraum 14 zum Boden 7 bzw. zur Verschlußplatte 10 freilassen. Anstelle dieser Zwischenräume 14 können auch Schlitze oder Bohrungen in den Wandelektroden 4 vorgesehen werden. Auf diese Weise wird sichergestellt, daß innerhalb des Gehäuses 2 und damit innerhalb der Sektionen 3 hinsichtlich der Gasfüllung gleiche physikalische Parameter eingestellt werden können.

Die erfindungsgemäße Detektoranordnung 1 erlaubt die Verwendung von weichen Beta-Strahlern, so daß die Einsatzmöglichkeiten insbesondere für Meßgüter mit geringer Flächenmasse erweitert werden. Oberhalb der Detektoranordnung 1 und in geringem Abstand zu dieser ist dazu eine linienförmige Strahlungsquelle 15 in Form einer Isotopenquelle angeordnet. Es ist jedoch auch möglich, beliebige andere Strahlungsquellen zu verwenden, deren Auswahl von der Art des zu messenden Meßgutes 16 abhängt, das zwischen der Strahlungsquelle 15 und der Detektoranordnung 1 hindurchzuführen ist, so daß die Strahlung 17 das Meßgut 16 durchdringt und in den Sektionen 3 eine Ionisation des in diesen befindlichen Gases verursacht. So ist es grundsätzlich auch möglich, Punktstrahler zu verwenden, wobei jeder Sektion 3 dann ein Punktstrahler zuzuordnen wäre.

Anstelle der Isotopenquelle können als Strahlungsquelle 15 auch technische Strahler, wie Elektronenbeschleuniger oder Röntgenröhren, verwendet werden.

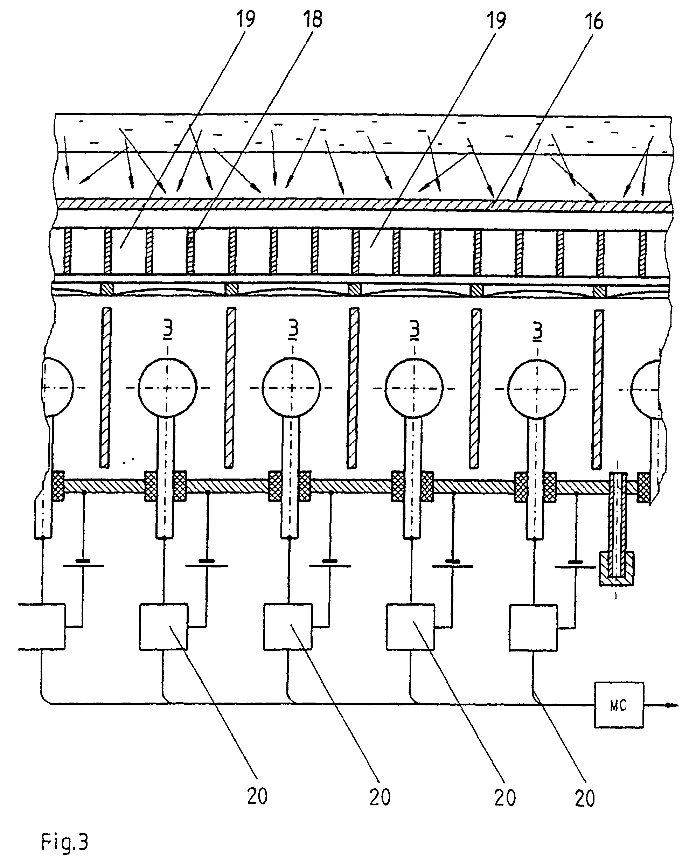

Entsprechend Fig. 3 kann unmittelbar unter der Strahlungsquelle 15 ein Kollimator 18 angeordnet werden, dessen Öffnungen 19 jeweils oberhalb einer Meßkammer 3 angeordnet sind. Dadurch erfolgt eine teilweise Ausblendung der Strahlung 17 und damit eine eindeutige Zuordnung der Meßwerte der Meßkammern 3 zum Meßgut 16.

Durch die parallele Anordnung der Meßkammern 3 und eine kollineare Emission der Strahlung durch die Verwendung der linearen Strahlungsquelle 15 in Verbindung mit dem Kollimatorsystem werden die mit der Strahlungsdivergenz verbundenen Probleme beseitigt.

Der durch die ionisierende Strahlung 17 verursachte Kammerstrom wird mit Hilfe von Strom-Spannungswandlern 20, die mit den Stützen 6 verbunden sind, umgewandelt und kann anschließend auf übliche Art und Weise ausgewertet werden.

Damit ist es möglich, mit einfachen Mitteln laufend das Querprofil des Meßgutes 16 zu bestimmen, wodurch auch eine unmittelbare Einflußnahme auf den Produktionsprozeß ermöglicht wird. Ebenso können die gewonnenen Daten zur Auswertung und Dokumentation des Produktionsprozesses verwendet werden.

Um eine Sammlung der im Detektor freiwerdenden Ladungen zu erreichen, ist zwischen den Sammelelektroden 5 und dem Gehäuse 2 eine Gleichspannungsquelle 21 geschaltet.

Die Anzahl und die Größe der innerhalb des Gehäuses 2 anzuordnenden Meßkammern 3 ist in Abhängigkeit von der geforderten Auflösung und der Breite der zu messenden Materialbahn frei wählbar.

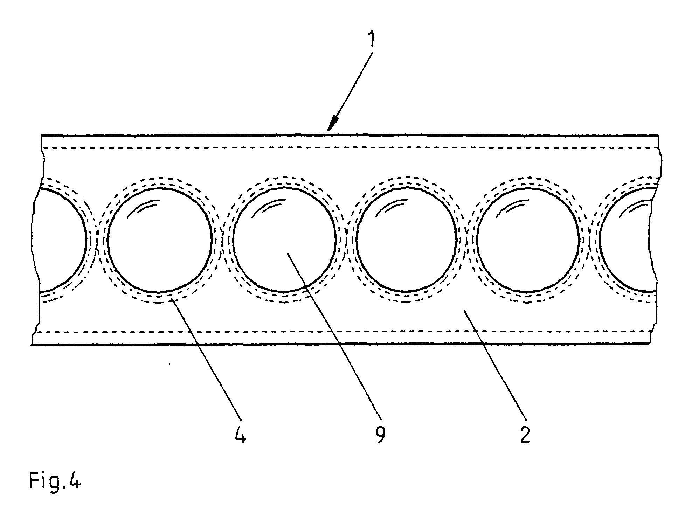

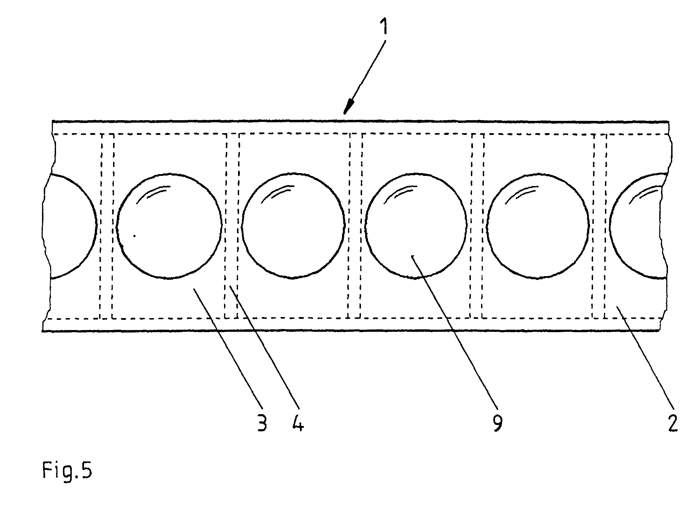

Fig. 4 zeigt eine Draufsicht auf eine Detektoranordnung 1 mit runden Meßkammern 3 und zugehörigen Strahlungseintrittsfenstern 9 und die Fig. 5 eine Detektoranordnung 1 mit eckigen Meßkammern 3 und runden Strahlungseintrittsfenstern 9.

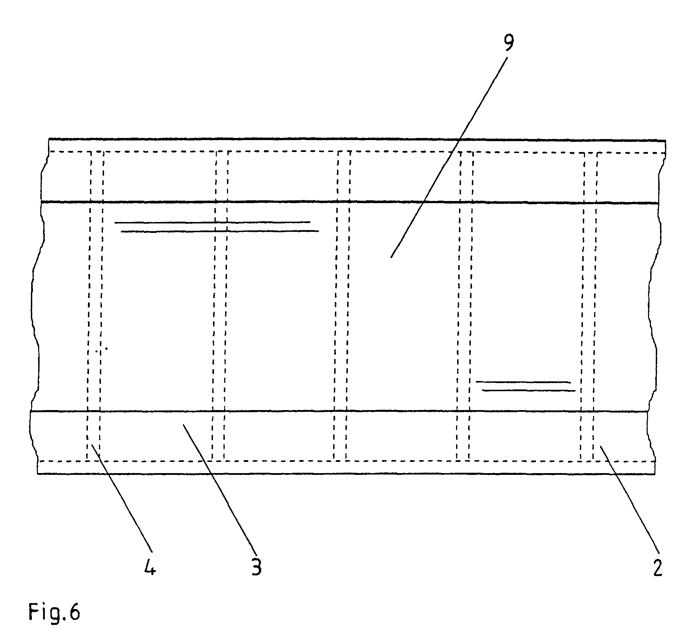

Aus Fig. 6 geht eine Variante der Detektoranordnung 1 hervor, bei der ein alle Meßkammern 3 überdeckendes durchgehendes Strahlungseintrittsfenster 9 vorgesehen ist, wodurch der Fertigungsaufwand reduziert werden kann.

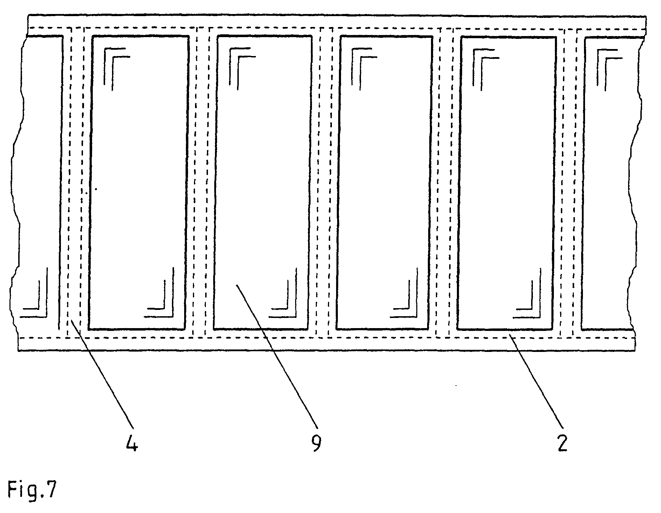

Eine weitere Variante der Detektoranordnung 1 geht aus Fig. 7 hervor. Hier besitzen die Strahlungseintrittsfenster 9 einen besonders großen rechteckigen Querschnitt, so daß eine hohe Empfindlichkeit/Auflösung auch bei einer weichen Strahlungsquelle 15 erreicht wird.

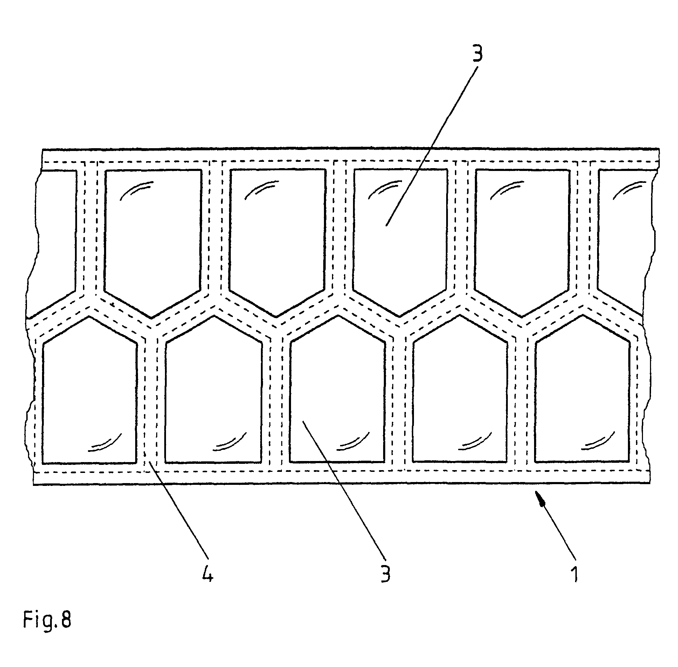

Um über die Breite des Meßgutes 16 eine gute Auflösung zu erreichen, können die Meßkammern 3 auch zweireihig versetzt angeordnet werden (Fig. 8), wobei bei ausreichender Strahlungsdivergenz quer zur Längserstreckung in diesem Fall eine linienförmige Strahlungsquelle 15 in Verbindung mit einem entsprechenden Kollimator 18 ausreichend ist.

Die vorstehend beschriebene Vorrichtung zur Kontrolle von Flächenmassen ist besonders einfach zu fertigen, da aufwendige Justage- oder Ausrichtvorgänge entfallen. Darüberhinaus entfallen jegliche Traversiervorgänge, da die Messung der Flächenmasse mit ruhenden Elementen erfolgt, wobei die Ermittlung eines Dickenprofiles über die gesamte Breite des Meßgutes 16 möglich ist und somit eine direkte Einflußnahme auf den Fertigungsprozess.

### Bezugszeichenliste

- 1: Detektoranordnung
- 2: Gehäuse
- 3: Sektion
- 4: Wandelektrode
- 5: Sammelelektrode
- 6: Stütze
- 7: Boden
- 8: Isolator
- 9: Strahlungseintrittsfenster
- 10: Verschlußplatte
- 11: Abpumpstutzen
- 12: Verschluß
- 13: Stirnkante
- 14: Zwischenraum
- 15: Strahlungsquelle
- 16: Meßgut
- 17: Strahlung
- 18: Kollimator
- 19: Öffnung
- 20: Strom-Spannungswandler
- 21: Gleichspannungsquelle

## Patentansprüche

1. Vorrichtung zur Kontrolle von Flächenmassen während der Produktion von Materialbahnen mittels einer Strahlungsquelle (15), welche die Materialbahn bzw. das Meßgut (16) durchstrahlt und Detektion der Reststrahlung auf der der Strahlungsquelle (15) gegenüberliegenden Seite des Meßgutes (16) mit Hilfe einer mit ionisierbarem Gas gefüllten Detektoranordnung (1), **dadurch gekennzeichnet**,
daß die Detektoranordnung (1) aus einer Mehrzahl von Sektionen (3) besteht, die durch Wandelelektroden (4) begrenzt werden,
daß die Sektionen (3) miteinander in Verbindung stehen und gemeinsam evakuierbar und gemeinsam mit ionisierbarem Gas befüllbar sind,
daß die Sektionen (3) innerhalb eines gemeinsamen Gehäuses (2) angeordnet sind,
daß jeder Sektion ein Strahlungseintrittsfenster (9) zugeordnet ist, und
daß die den Sektionen (3) zugeordnete Strahlungsintensität der Strahlungsquelle (15) eine linienförmige Verteilung aufweist.

2. Vorrichtung nach Anspruch 1, **dadurch gekennzeichnet**, daß zwischen den die Wandelektroden (4) bildenden Wänden der Sektionen (3) und den jeweiligen Sammelelektroden (5) eine Potentialdifferenz besteht.

3. Vorrichtung nach Anspruch 1, **dadurch gekennzeichnet**, daß die Sammelelektroden (5) auf elektrisch leitenden Stützen (6) befestigt sind, die über Isolatoren (8) in den Boden (7) der Detektoranordnung (1) eingelassen sind.

4. Vorrichtung nach Anspruch 1 bis 3, **dadurch gekennzeichnet**, daß die Sektionen (3) nebeneinander angeordnet sind und die gesamte Breite des zu messenden Meßgutes (16) überdecken.

5. Vorrichtung nach einem der Ansprüche 1 bis 4, **dadurch gekennzeichnet**, daß die Form der Strahlungseintrittsfenster (9) dem Querschnitt der Sektionen (3) entspricht.

6. Vorrichtung nach Anspruch 5, **dadurch gekennzeichnet**, daß die Strahlungseintrittsfenster (9) und die Sektionen (3) rund ausgebildet und nebeneinander angeordnet sind.

7. Vorrichtung nach den Ansprüchen 1 bis 4, **dadurch gekennzeichnet**, daß Strahlungseintrittsfenster (9) rund und die zugehörigen Sektionen (3) eckig ausgebildet sind.

8. Vorrichtung nach einem der Ansprüche 1 bis 7, **dadurch gekennzeichnet**, daß die Sektionen (3) in wenigstens zwei Reihen versetzt nebeneinander angeordnet sind.

9. Vorrichtung nach Anspruch 8, **dadurch gekennzeichnet**, daß alle Sektionen (3) mit einem gemeinsamen streifenförmigen Strahlungseintrittsfenster (9) versehen sind.

10. Vorrichtung nach den Ansprüchen 1 bis 9, **dadurch gekennzeichnet**, daß die Strahlungsquelle (15) aus einer Isotopenquelle besteht.

11. Vorrichtung nach Anspruch 10, **dadurch gekennzeichnet**, daß sich die Strahlungsquelle (15) über alle Sektionen (3) erstreckt.

12. Vorrichtung nach Anspruch 10 und 11, **dadurch gekennzeichnet**, daß der Strahlungsquelle (15) ein Kollimator (18) zugeordnet ist.

13. Vorrichtung nach Anspruch 12, **dadurch gekennzeichnet**, daß der Kollimator (18) zwischen der Strahlungsquelle (15) und dem Meßgut (16) angeordnet ist.

14. Vorrichtung nach Anspruch 12 und 13, **dadurch gekennzeichnet**, daß der Kollimator (18) der gegenüberliegenden Detektoranordnung (1) angepaßt ist.

15. Vorrichtung nach den Ansprüchen 12 bis 14, **dadurch gekennzeichnet**, daß der Kollimator (18) Öffnungen (19) aufweist, deren Querschnitt geringer ist, als der Querschnitt der Strahleneintrittsfenster (9).

16. Vorrichtung nach Anspruch 15, **dadurch gekennzeichnet**, daß die Wandungen der Öffnungen (19) in Richtung zur Detektoranordnung (1) divergieren.

17. Vorrichtung nach den Ansprüchen 1 bis 16, **dadurch gekennzeichnet**, daß die Strahlungsquelle (15) unmittelbar über dem Meßgut (16) angeordnet ist.

18. Vorrichtung nach den Ansprüchen 1 bis 17, **dadurch gekennzeichnet**, daß die Sammelelektroden (5) jeweils mit Strom-Spannungswandlern (20) verbunden sind.

19. Vorrichtung nach Anspruch 18, **dadurch gekennzeichnet**, daß die von den Strom-Spannungswandlern (20) gelieferten Meßwerte digitalisiert und parallel oder seriell einer Schnittstelle einer Auswertesoftware zugeführt werden.

20. Vorrichtung nach den Ansprüchen 1 bis 9, **dadurch gekennzeichnet**, daß jeder Sektion (3) eine punktförmige Strahlungsquelle zugeordnet ist.

21. Vorrichtung nach Anspruch 20, **dadurch gekennzeichnet**, daß die Strahlungsquellen äquidistant zu den Sektionen (3) angeordnet sind.

22. Vorrichtung nach einem der Ansprüche 1 bis 21, **dadurch gekennzeichnet**, daß als Strahlungsquelle ein weicher Beta-Strahler verwendet wird.

23. Vorrichtung nach einem der Ansprüche 1 bis 22, **dadurch gekennzeichnet**, daß als Strahlungsquelle ein technischer Strahler verwendet wird.

## Claims

1. Device for monitoring weights per unit area during the production of material webs by means of a radiation source (15) from which radiation passes through the material web or the material under investigation (16) and detection of the residual radiation on the side of the material under investigation (16) opposite from the radiation source (15) with the aid of a detector arrangement filled with ionizable gas, characterized in that the detector arrangement (1) comprises a plurality of sections (3) which are bounded by wall electrodes (4), in that the sections (3) are interconnected and can be evacuated together and can be filled with ionizable gas together, in that the sections (3) are arranged within a common housing (2), in that each section is assigned a radiation inlet window (9), and in that the radiation intensity of the radiation source (15) assigned to the sections (3) has a linear distribution.

2. Device according to Claim 1, characterized in that between the walls of the sections (3) forming the wall electrodes (4) and the respective collecting electrodes (5) there is a potential difference.

3. Device according to Claim 1, characterized in that the collecting electrodes (5) are fastened on electrically conducting supports (6), which are recessed into the base (7) of the detector arrangement (1) by means of insulators (8).

4. Device according to Claims 1 to 3, characterized in that the sections (3) are arranged next to one another and cover the entire width of the material under investigation to be measured.

5. Device according to one of Claims 1 to 4, characterized in that the form of the radiation inlet windows (9) corresponds to the cross section of the sections (3).

6. Device according to Claim 5, characterized in that the radiation inlet windows (9) and the sections (3) are of a round form and are arranged next to one another.

7. Device according to Claims 1 to 4, characterized in that the radiation inlet windows (9) are of a round form and the associated sections (3) are of an angular form.

8. Device according to one of Claims 1 to 7, characterized in that the sections (3) are arranged offset alongside one another in at least two rows.

9. Device according to Claim 8, characterized in that all the sections (3) are provided with a common strip-shaped radiation inlet window (9).

10. Device according to Claims 1 to 9, characterized in that the radiation source (15) comprises an isotope source.

11. Device according to Claim 10, characterized in that the radiation source (15) extends over all the sections (3).

12. Device according to Claims 10 and 11, characterized in that the radiation source (15) is assigned a collimator (18).

13. Device according to Claim 12, characterized in that the collimator (18) is arranged between the radiation source (15) and the material under investigation (16).

14. Device according to Claims 12 and 13, characterized in that the collimator (18) is adapted to the detector arrangement (1) lying opposite.

15. Device according to Claims 12 to 14, characterized in that the collimator (18) has openings (19), the cross section of which is smaller than the cross section of the radiation inlet windows (9).

16. Device according to Claim 15, characterized in that the walls of the openings (19) diverge in the direction of the detector arrangement (1).

17. Device according to Claims 1 to 16, characterized in that the radiation source (15) is arranged directly above the material under investigation (16).

18. Device according to Claims 1 to 17, characterized in that the collecting electrodes (5) are respectively connected to current-voltage converters (20).

19. Device according to Claim 18, characterized in that the measured values supplied by the current-voltage converters (20) are digitized and are fed in parallel or in series to an interface of evaluation software.

20. Device according to Claims 1 to 9, characterized in that each section (3) is assigned a punctiform radiation source.

21. Device according to Claim 20, characterized in that the radiation sources are arranged equidistantly in relation to the sections (3).

22. Device according to one of Claims 1 to 21, characterized in that a low-energy beta radiator is used as the radiation source.

23. Device according to one of Claims 1 to 22, characterized in that an industrial radiator is used as the radiation source.

## Revendications

1. Dispositif de contrôle des masses surfaciques pendant la production de bandes de matériau au moyen d'une source de rayonnement (15) qui balaye la bande de matériau ou le produit à mesurer (16) et de détection du rayonnement résiduel sur le côté du produit à mesurer (16) opposé à la source de rayonnement (15) à l'aide d'un arrangement détecteur (1) rempli de gaz ionisant, caractérisé en ce
que l'arrangement détecteur (1) se compose d'une pluralité de sections (3) qui sont délimitées par des électrodes murales (4),
que les sections (3) sont reliées les unes aux autres et peuvent être mises sous vide en même temps et remplies en même temps de gaz ionisant,
que les sections (3) sont disposées à l'intérieur d'un boîtier commun (2),
qu'une fenêtre d'entrée du rayonnement (9) est associée à chaque section, et
que l'intensité du rayonnement de la source de rayonnement (15) associé aux sections (3) présente une distribution rectiligne.

2. Dispositif selon la revendication 1, caractérisé en ce qu'il existe une différence de potentiel entre les parois des sections (3) qui forment les électrodes murales (4) et chacune des électrodes collectrices (5).

3. Dispositif selon la revendication 1, caractérisé en ce que les électrodes collectrices (5) sont fixées sur des supports (6) conducteurs d'électricité

4. Dispositif selon les revendications 1 à 3, caractérisé en ce que les sections (3) sont disposées les unes à côté des autres et qu'elles recouvrent toute la largeur du produit à mesurer (16).

5. Dispositif selon l'une des revendications 1 à 4, caractérisé en ce que la forme de la fenêtre d'entrée du rayonnement (9) correspond à la section transversale des sections (3).

6. Dispositif selon la revendication 5, caractérisé en ce que la fenêtre d'entrée du rayonnement (9) et les sections (3) ont une forme ronde et sont disposées les unes à côté des autres.

7. Dispositif selon l'une des revendications 1 à 4, caractérisé en ce que la fenêtre d'entrée du rayonnement (9) est de forme ronde et les sections (3) correspondantes sont de forme rectangulaire.

8. Dispositif selon l'une des revendications 1 à 7, caractérisé en ce que les sections (3) sont disposées les unes à côté des autres décalées sur au moins deux rangées.

9. Dispositif selon la revendication 8, caractérisé en ce que toutes les sections (3) sont munies d'une fenêtre d'entrée du rayonnement (9) commune en forme de bande.

10. Dispositif selon l'une des revendications 1 à 9, caractérisé en ce que la source de rayonnement (15) se compose d'une source d'isotopes.

11. Dispositif selon la revendication 10, caractérisé en ce que la source de rayonnement (15) s'étend sur toutes les sections (3).

12. Dispositif selon la revendication 10, caractérisé en ce qu'un collimateur (18) est associé à la source de rayonnement (15).

13. Dispositif selon la revendication 12, caractérisé en ce que le collimateur (18) est disposé entre la source de rayonnement (15) et le produit à mesurer (16).

14. Dispositif selon la revendication 12 et 13, caractérisé en ce que le collimateur (18) est adapté à l'arrangement détecteur (1) opposé.

15. Dispositif selon les revendications 12 à 14, caractérisé en ce que le collimateur (18) présente des ouvertures (19) dont la section est inférieure à la section de la fenêtre d'entrée du rayonnement (9).

16. Dispositif selon la revendication 15, caractérisé en ce que les parois des ouvertures (19) divergent en direction de l'arrangement détecteur (1).

17. Dispositif selon les revendications 1 à 16, caractérisé en ce que la source de rayonnement (15) est disposée directement au-dessus du produit à mesurer (16).

18. Dispositif selon les revendications 1 à 17, caractérisé en ce que les électrodes collectrices (5) sont toutes reliées à des convertisseurs courant/tension (20).

19. Dispositif selon la revendication 18, caractérisé en ce que les valeurs mesurées délivrées par les convertisseurs courant/tension (20) sont numérisées et acheminées en parallèle ou en série à l'interface d'un logiciel d'interprétation.

20. Dispositif selon les revendications 1 à 9, caractérisé en ce qu'une source de rayonnement ponctuelle est associée à chaque section (3).

21. Dispositif selon la revendication 20, caractérisé en ce que les sources de rayonnement sont disposées de manière équidistante par rapport aux sections (3).

22. Dispositif selon l'une des revendications 1 à 21, caractérisé en ce que la source de rayonnement utilisée est un émetteur de rayons bêta.

23. Dispositif selon l'une des revendications 1 à 22, caractérisé en ce que la source de rayonnement utilisée est un projecteur technique.
